# EUROPEAN PATENT APPLICATION

(11) **EP 4 160 846 A1**
(43) Date of publication of application: **05.04.2023**
(21) Application number: 21200392.5
(22) Date of filing: 01.10.2021
(51) Int. Cl.: H02J 3/00, H02J 3/14

(54) **DEVICE AND METHOD FOR AVOIDANCE OF UNDESIRED OSCILLATIONS IN AN ELECTRICAL GRID**

(71) Applicant: Siemens Aktiengesellschaft, 80333 München (DE)
(72) Inventor: Jäger, Michael, 81541 München (DE); Salecker, Jürgen, 81827 München (DE)
(74) Representative: Siemens Patent Attorneys

(57) **Abstract**

The invention discloses an automated method for supplying electric power to an electrical or electronic device connected to mains (4), characterized by:
- after an unsolicited power failure of the mains (4) delaying the power consumption of the electrical or electronic device during switching-on of the electrical or electronic device by a randomized delay time determined by the electrical or electronic device (102),
- whereby the unsolicited power failure is defined by dropping of the mains frequency by more than 2,5 Hz before a power failure, whereby the dropping is determined by the electrical or electronic device (100).

An electrical or electronic device performing the disclosed method is disclosed as well.

## Description

### FIELD OF THE INVENTION

The present invention relates to an automated method and electrical or electronic device for supplying electric power to the electrical or electronic device connected to mains.

### BACKGROUND OF THE INVENTION

After an electrical outage, at some point power is restored again. Then all attached devices are usually in power-on mode resulting in a so called "switch-on surge" whereby a much higher current is drawn by devices than at full normal load. The problem is two folded:
1. Very often even commercial off-the-shelf components (e.g., MPPT 75 I 15, BlueSolar charge controller) have not sufficient "soft start" capabilities built in, causing the current at power on to jumpstart towards 30 A. After about 15 ms the system is back to normal load, which is ~0.2 A. However, the spike causes the circuit breaker to trigger (triggers at ~16 A).
2. Jump-starting a bunch of electrical devices which are usually switched on in sequence, cause a sum of jump-start current issues, which even might trigger the main circuit breaker as well. This situation is further accelerated by missing sufficient soft-start capabilities of even commercial charge controllers as described above.

In a server room or a complex device setup, such as control rooms, server rooms, offices with computer equipment, labs, all the devices left in power on mode will start at the same time. The consequence is that the switch on surge triggers the main circuit breaker due to current spikes, switching the whole system off again. However, in the cases where the main circuit breaker is not triggered, a situation as described below might be the result, which is even worse, as described here in this description - from a valuable Internet source - that colourfully reports the problem from a sysadmin perspective:
"What a wasted day. The power outage has cost me all day so far because it has scrapped the system SSD and its backup SSD connected via Raid-1 at the same time.

Obviously, the problem was starting the power and then a few seconds later a new stalling with residual power at a time when my battery buffer (Uninterruptible power supply/UPS) was already empty. The SSDs are physically fine, but the installation was somehow destroyed, obviously something was written somewhere and now both discs don't boot anymore, and I have to set up the server from scratch.

Data has never been in danger and is redundant on other systems, even offline. But the various applications, such as setting up a calendar server again, are terrible fumble. And since these are things that you only do every few years, you have forgotten almost everything and can start from scratch again.

In this respect, all this is not a drama, but a senseless, fiddly expenditure of time with a lot of looking up and researching what you have done before, but forgotten again, or have changed since then."

In everyday life, the effect has also been reported by some people with their home computer equipment: The PC workplace and light was connected to a single bar of power outlets (CRT monitor, laser printer, computer, hard drive, etc.) with a central power on switch. This setup has led to a fuse disabling the entire power circuit as well. Even though the overall power consumption is far below of the maximum (3700 Watt), together with the light we talk about just 300W.

The problem becomes even worse when we consider remote area equipment where technicians are not present and need to dedicatedly reach the site. For such setup, a more autonomous capability at start-up for all devices in total can save efforts and cost.

Even commercial off-the-shelf components (as the example described above) do not have sufficient soft start capabilities build-in. However, even if they had soft-start capabilities build-in professional, in larger setups (e.g., server rooms) the start-up after a power outage will usually start at the same time for all devices, causing a sum of jump start events, most likely with bad consequences to the devices (as described above the real use-case from a small server room).

Trying to shift the problem by using UPSs will work until the batteries in the UPSs are empty.

Also, so named "inrush current limiters" can be bought which will limit the switch on current. However, for larger setups this poses the question of where is going to be placed and also leading at individual devices still to a notable increase of the inrush current. With inrush current limiters, the tolerance for a power overload is increased, but the effect remains.

### SUMMARY OF THE INVENTION

The objective of the present invention is to provide a solution for avoiding switch-on surge outages.

### Over current protection (OCP)

To accomplish the objective, the present invention provides a solution according to the independent claims. Advantageous embodiments are provided in the dependent claims.

According to an aspect of the invention an unsolicited power failure is (1) detected by measuring the mains frequency, if this frequency falls below a limit (in Europe below 47,5 Hz) and (2) if the time between a power-off and power-on was less than one period of the net-frequency (20ms for 50Hz).

The invention claims an automated method for supplying electric power to an electrical or electronic device connected to mains, whereby after an unsolicited power failure of the mains delaying the power consumption of the electrical or electronic device during switching-on of the electrical or electronic device by a randomized delay time determined by the electrical or electronic device, whereby the unsolicited power failure is defined by dropping of the mains frequency by more than 2,5 Hz (for a 50Hz net) before a power failure, whereby the dropping is determined by the electrical or electronic device.

The advantage of the disclosure is that failure from power on surges is fully eliminated which becomes increasingly relevant for remote facilities or autonomously acting facilities. Either sensing or randomly delay the power-on phase of every device and thus every device's surge will provide a reliable help against power-on surge outages (= power failures).

Moreover, correct behaviour (and no sudden additional power loss) at power-on phases reduces wear and tear on every device. Usually, and especially in electronics, the most stress on material is posed at power on phases. Thus, such a solution improves the overall reliability and endurance of devices.

In a further embodiment of the method the delay time lies in the range of 0,5 to 10 seconds.

In a further embodiment of the method the occurrence of an unsolicited power failure and/or the delay time is stored in a non-volatile memory of the electrical or electronic device.

In a further embodiment of the method a power failure is an unsolicited power failure of the mains only if the mains frequency drops within a time limit of 10 seconds before the power failure.

The invention further claims an electrical or electronic device supplied with electrical power by mains. The device is designed and programmed to delay the power consumption of the electrical or electronic device during switching-on of the electrical or electronic device by a randomized delay time after an unsolicited power failure of the mains. The device comprises a measurement unit designed and programmed to determine an unsolicited power failure, whereby the unsolicited power failure is defined by dropping of the mains frequency by more than 2,5 Hz before a power failure.

In a further embodiment of the device the measurement unit comprises a mains frequency measurement unit designed and programmed to measure the mains frequency with an accuracy of +/-100 mHz.

In a further embodiment of the device the device comprises a memory to store the occurrence of the unsolicited power failure.

In a further embodiment of the device the device comprises a random number generator unit designed and programmed to calculate the delay time after an unsolicited power failure.

In a further embodiment of the device the delay time lies in the range of 0,5 to 10 seconds.

In a further embodiment of the device a power failure is an unsolicited power failure of the mains only if the mains frequency drops within a time limit of 10 seconds before the power failure, or the time between power-on and power-off was less than a net frequency period (20ms by 50 Hz) of time.

In a further embodiment of the device the device is designed as a multi-way connector, a multiple socket outlet or a wall socket.

The invention further claims an electrical or electronic device supplied with electrical power by mains designed and programmed to perform the method according to the invention.

Further benefits and advantages of the present invention will become apparent after a careful reading of the detailed description with appropriate reference to the accompanying drawings.

### BRIEF DESCRIPTION OF THE DRAWINGS

- FIG. 1: shows a measured time-frequency diagram of the mains,
- FIG. 2: shows a flow chart of the disclosed method,
- FIG. 3: shows a block diagram of the disclosed electrical or electronic device.

### DETAILED DESCRIPTION OF THE INVENTION

Instead of plainly filtering the maximal current, which only scales up the maximum number of devices starting up at once, each of the devices are equipped with an electrical collision detection (ECD) mechanism. The idea of collision detection on a medium inherits from the area of networking to avoid two nodes using the medium at the same time, which would result in a collision.

More precisely, in computer networks, the entire mechanism is called Carrier Sense Multiple Access with Collision Detection (CSMA/CD). This approach is transferred to the problem of drawing power at start-up as described above: Multiple devices "access" electrical power and can sense other devices "accessing" the power.

The disclosure proposes after an unsolicited power drop to delay or postpone the devices' start (delaying consume power) by random delay time. The delay time needs to be calculated by every device as long as everything is okay and kept inside it. An algorithm will ensure that this random time is even random on the same type of device.

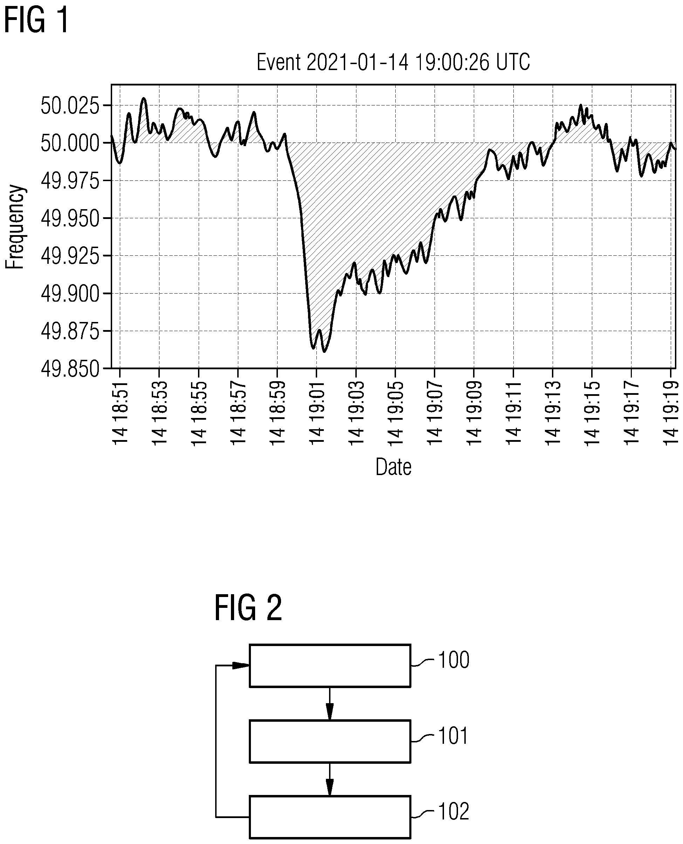

The problem is, how to distinguish between a normal power-on (switch-on) and a power-on after a power outage (= power failure). Therefore, every device monitors the mains frequency with an accuracy of about +/- 100 mHz. A short time before a major power failure the mains frequency is changing significantly (>> 0,1 Hz), as shown in FIG. 1 measured on January 14, 2021. FIG. 1 shows a time-frequency diagram of the mains.

However, if the mains frequency becomes "normal" again and no power drop did happen (after around 10 sec, see FIG. 1), this event should be discarded by every device. But, if a power failure happens, then the device has usually several milliseconds time left (due to capacitors & inductions in the power supply) to store the appropriate root-cause of this accidental event in a non-volatile memory. With the next power-on the random power access build-in feature will be launched, causing therefore a non-sequential power-on of devices even connected on the same power line.

In order to simplify the solution, the disclosure therefore propose to have such an electrical collision detection (ECD) unit build-in into dedicated power plug socket outlets. This provides an easy integration of all available electrical equipment.

FIG. 2 shows a flow chart of the disclosed automated method in a nutshell. The method is controlling the supply of electric power to an electrical or electronic device connected to mains. The device is continuously measuring the mains frequency (box 100). If the mains frequency is dropping by more than 2,5 Hz before detecting a power failure this event is stored in the memory as an unsolicited power failure (box 101). After such an occurrence of an unsolicited power failure the power consumption of the electrical or electronic device during the next switching-on of the electrical or electronic device is delayed by a randomized delay time determined by the electrical or electronic device (box 102).

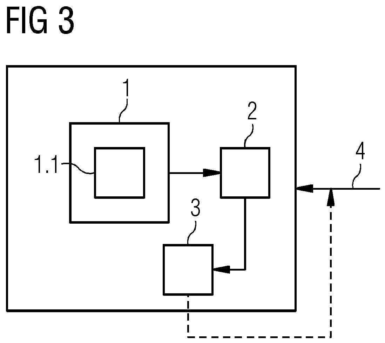

FIG. 3 shows a block diagram of the disclosed electrical or electronic device which is capable of performing the method of Fi. 2. The electrical or electronic device is supplied with electrical power by mains 4. The device is designed and programmed to delay the power consumption of the electrical or electronic device during switching-on of the electrical or electronic device by a randomized delay time after an unsolicited power failure of the mains 4.

The measurement unit 1 of the device is designed and programmed to determine the unsolicited power failure, whereby the unsolicited power failure is defined by dropping of the mains frequency by more than 0,1 Hz before a power failure.

The measurement unit 1 comprises a mains frequency measurement unit 1.1 designed and programmed to measure the mains frequency with an accuracy of 100 mHz. Preferably, the measurement mains frequency measurement unit 1 comprises a frequency counter for this task.

The device further comprising a memory 2 to store the occurrence of the unsolicited power failure determined by the measurement unit 1.

The device further comprises a random number generator unit 3 designed and programmed to calculate the delay time after an unsolicited power failure. The calculated delay time is used for delaying the power consumption of the mains 4. Preferably, the delay time lies in the range of 0,5 to 10 seconds. The power failure is an unsolicited power failure of the mains only if the mains frequency drops within a time limit of 10 seconds before the power failure.

The device is for example designed as a multi-way connector, a multiple socket outlet or a wall socket.

A simpler and more cost-efficient solution can be implemented at power outlet bars. For each of the outlets, a switch on delay of random is implemented. The timespan for random delays can be rather short, like 2-5 seconds or 10-30 seconds. Within the delay time, the covered power outlets are switched on at randomly different times. With this implementation, a joint power on surge from multiple devices is prevented.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: measurement unit
- 1.1: mains frequency measurement unit
- 2: memory
- 3: random number generator unit
- 4: mains

- 100: continuously measuring the mains frequency
- 101: storing of an unsolicited power failure in the memory
- 102: determining a randomized delay time

## Claims

1. Automated method for supplying electric power to an electrical or electronic device connected to mains (4), **characterized by**:
- after an unsolicited power failure of the mains (4) delaying the power consumption of the electrical or electronic device during switching-on of the electrical or electronic device by a randomized delay time determined by the electrical or electronic device (102),
- whereby the unsolicited power failure is defined by dropping of the mains frequency by more than 2,5 Hz before a power failure, whereby the dropping is determined by the electrical or electronic device (100).

2. The method according to claim 1,
whereby the unsolicited power failure is additionally defined by a time less than the net-frequency period between power-off and power-on.
(20ms a@50Hz)

3. The method according to claim 1 or 2, whereby the delay time lies in the range of 0,5 to 10 seconds.

4. The method according to claim 1, 2 or 3, whereby the occurrence of an unsolicited power failure and/or the delay time is stored in a memory (4) of the electrical or electronic device (101).

5. The method according to one of the previous claims, whereby a power failure is an unsolicited power failure of the mains (4) only if the mains frequency drops within a time limit of 10 seconds before the power failure.

6. Electrical or electronic device supplied with electrical power by mains (4)
- designed and programmed to delay the power consumption of the electrical or electronic device during switching-on of the electrical or electronic device by a randomized delay time after an unsolicited power failure of the mains (4), comprising:
- a measurement unit (1) designed and programmed to determine an unsolicited power failure, whereby the unsolicited power failure is defined by dropping of the mains frequency by more than 0,1 Hz before a power failure.

7. The device according to claim 6, whereby the unsolicited power failure is additionally defined by a time less than the net-frequency period between power-off and power-on.

8. The device according to claim 6 or 7, whereby the measurement unit (1) comprises a mains frequency measurement unit (1,1) designed and programmed to measure the mains frequency with an accuracy of 5 mHz.

9. The device according to claim 6, 7 or 8, comprising a memory (2) to store the occurrence of the unsolicited power failure.

10. The device according to one of the claims 6 to 9, comprising a random number generator unit (3) designed and programmed to calculate the delay time after an unsolicited power failure.

11. The device according to one of the claims 6 to 10, whereby the delay time lies in the range of 0,5 to 10 seconds.

12. The device according to one of the claims 6 to 11, whereby a power failure is an unsolicited power failure of the mains (4) only if the mains frequency drops within a time limit of 10 seconds before the power failure.

13. The device according to one of the claims 6 to 12, whereby the device is designed as a multi-way connector, a multiple socket outlet or a wall socket.

14. Electrical or electronic device supplied with electrical power by mains (4) designed and programmed to perform the method according to one of the claims 1 to 5.
